# EUROPÄISCHE PATENTANMELDUNG

(11) **EP 1 389 834 A1**
(43) Veröffentlichungstag der Anmeldung: **18.02.2004**
(21) Anmeldenummer: 02018395.0
(22) Anmeldetag: 14.08.2002
(51) Int. Cl.: H04B 1/707, H04B 7/06

(54) **Verfahren zur Unterstützung der Kanalschätzung und zugehörige Basisstation**

(71) Anmelder: SIEMENS AKTIENGESELLSCHAFT, 80333 München (DE)
(72) Erfinder: Seeger, Alexander, Dr., 85622 Feldkirchen (DE)

(57) **Zusammenfassung**

Die Erfindung betrifft ein Verfahren zur Unterstützung der Kanalschätzung in Abwärtsrichtung in einem CDMA-Funkkommunikationssystem, umfassend mindestens eine Basisstation (BS) und mindestens eine Teilnehmerstation (MS), welche über einen Funkschnittstelle miteinander verbunden sind, wobei in der Abwärtsstrecke eine Strahlformung mittels mehrerer Antennen (A1,A2) eingesetzt wird, und wobei die mindestens eine Basisstation (BS) mindestens eine Pilotsequenz übermittelt, auf deren Grundlage die mindestens eine Teilnehmerstation (MS) die Kanalschätzung in Abwärtsrichtung durchführt. Erfindungsgemäß variieren von der mindestens einen Basisstation (BS) zur Übertragung der mindestens einen Pilotsequenz verwendete Parameter mit der Zeit.

## Beschreibung

Die Erfindung betrifft ein Verfahren zur Unterstützung der Kanalschätzung in Abwärtsrichtung in einem CDMA-Funkkommunikationssystem nach dem Oberbegriff des Anspruchs 1.

Ferner betrifft die Erfindung eine Basisstation für ein CDMA-Funkkommunikationssystem nach dem Oberbegriff des Anspruchs 19.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's, sowie weitere netzseitige Einrichtungen. Die Teilnehmerstationen und die Basisstationen sind in einem Funkkommunikationssystem über eine Funkschnittstelle miteinander verbunden.

Der Zugriff von Stationen auf die gemeinsamen Funkressourcen des Übertragungsmediums, wie zum Beispiel Zeit, Raum, Frequenz, Leistung wird bei Funk-Kommunikationssystemen durch Vielfachzugriffsverfahren (Multiple Access, MA) geregelt.

Einige Funkkommunikationssysteme der dritten Generation verwenden ein Codevielfachzugriffsverfahren (CDMA, Code Division Multiple Access). Ein Beispiel hierfür sind WCDMA Systeme (Wideband CDMA). Hierzu zählt die FDD-Komponente (FDD: Frequency Division Duplex) des UMTS-Standards (UMTS: Universal Mobile Telecommunications System) in Europa sowie das amerikanische cdma2000. WCDMA ist ein Zugangsverfahren für die Mobilfunkkommunikation, welches auf der Verwendung von mindestens zwei 5 MHz Frequenzbändern für die Übertragung in Aufwärts- sowie in Abwärtsrichtung (FDD Technologie) beruht.

Nach dem Empfang eines Signals muss die empfangende Station (Teilnehmerstation oder Basisstation) dieses verarbeiten. Hierzu findet eine Kanalschätzung statt, welche die empfangene Intensität des jeweiligen Kanals überprüft. In Hinblick auf stark assymetrische Datenübertragungen, bei welchen die Datenrate in Abwärtsrichtung (downlink), d.h. von Basisstation zur Teilnehmerstation, sehr viel größer ist als in der Aufwärtsrichtung (uplink), d.h. von der Teilnehmerstation zur Basisstation, ist insbesondere die Kanalschätzung in Abwärtsrichtung von Interesse. In FDD Systemen besteht hierbei das Problem, dass sich der Kanal in Abwärtsrichtung von demjenigen in Aufwärtsrichtung unterscheidet.

Zur Kanalschätzung in Abwärtsrichtung wird üblicherweise ein Primary Common Pilot Channel (P-CPICH) eingesetzt. Hierbei handelt es sich um einen Kanal, auf welchem eine Pilotsequenz mit hoher Sendeleistung omnidirektional (im Gegensatz zu einer gerichteten Abstrahlung durch strahlformende Antennen) abgestrahlt wird. Dieser CPICH wird von vielen Teilnehmerstationen in einer Funkzelle zur Kanalschätzung verwendet. Somit wird der durch die Aussendung der Pilotsequenzen anfallende Overhead unter den Teilnehmerstationen aufgeteilt. Eine andere Möglichkeit zur Kanalschätzung in Abwärtsrichtung besteht darin, Pilotsequenzen von dedizierten Kanälen zu verwenden. Unter dedizierten Kanälen (dedicated channels) versteht man Kanäle, welche einer Teilnehmerstation exklusiv zur Übertragung von Nutz- und Signalisierungsinformationen zugeteilt werden. Die Verwendung von Pilotsequenzen dedizierter Kanäle weist jedoch aufgrund der geringeren Sendeleistung in den dedizierten Kanälen im Vergleich zum CPICH eine größere Fehlerwahrscheinlichkeit durch Rauschen auf, verursacht durch den geringeren Wert des Signal-zu-Rausch Verhältnisses (SIR: Signal to Noise Ratio). Die Kanalschätzung in Abwärtsrichtung beruht also grundsätzlich auf Pilotsequenzen, welche von der Basisstation übermittelt werden. Durch eine geeignete Übertragung dieser Pilotsequenzen kann eine Basisstation somit die Teilnehmerstationen bei der Durchführung der Kanalschätzung unterstützen.

Die Effizienz der Verwendung eines Common Pilot Channels (CPICH) hängt aufgrund der gemeinsamen Nutzung des durch den CPICH erzeugten Overhead von der Anzahl an Teilnehmerstationen in einer Funkzelle ab. Im Fall, dass sich in einer Zelle nur wenige Teilnehmerstationen aufhalten, wird die Ressourceneinsparung durch die gemeinsame Nutzung des CPICH reduziert. Diese Situation tritt z.B. in der HSDPA-Technologie (High Speed Downlink Packet Access) auf. Dabei handelt es sich um ein Verfahren, welches im Rahmen von WCDMA Systemen standardisiert wurde. Hierzu ermitteln alle Teilnehmerstationen innerhalb einer Zelle die Kanalgüte in Abwärtsrichtung und übermitteln diese Ergebnisse an die jeweilige Basisstation. Ein Kanal wird nur denjenigen Teilnehmerstationen zugewiesen, welche die besten Werte für die Kanalgüte ermittelt haben. Das Modulationsverfahren und die Codierungsrate kann an die Kanalgüte angepasst werden. Dieses Verfahren eignet sich aufgrund der zeitlich ungleichmäßigen Datenrate, welche eine burstartige Struktur aufweist, besonders für Dienste, welche keine Echtzeit-Übertragung erfordern. Bei Verwendung von HSDPA werden zu einem Zeitpunkt Daten nur zu wenigen Teilnehmerstationen übertragen. Deren Anzahl beträgt typischerweise 2 bis 4. Daraus folgt eine drastische Reduzierung der Effizienz eines CPICH.

Felder von adaptiven Antennen (adaptive antenna array, smart antenna) können eingesetzt werden, um die Ausnutzung der Ressourcen eines Funkkommunikationssystems in Abwärtsrichtung zu erhöhen, da die gegenseitige Störbeeinflussung der zu verschiedenen Teilnehmerstationen gesendeten Signale reduziert wird. Dies wird durch eine Strahlformung erreicht, d.h. das Signal wird von der Basisstation nicht omnidirektional, sondern räumlich gerichtet ausgestrahlt. Derartige Technologien werden auch mit dem Begriff SDMA (Space Division Multiple Access) bezeichnet.

Die Basisstation übermittelt das Signal an die Teilnehmerstation über einen dedizierten Kanal durch jede Einzelantenne des Feldes von adaptiven Antennen. Hierzu wird an jeder Einzelantenne das Signal mit einem antennenspezifischen Faktor multipliziert, so dass sich aus der Summe der von den Einzelantennen gesendeten Signale eine teilnehmerspezifische Strahlform ergibt. Der Vektor, welcher aus den antennenspezifischen Faktoren für eine Teilnehmerstation besteht, wird Gewichtsvektor oder Strahlformungsvektor genannt.

Bei der Verwendung von adaptiven Antennen stellt sich bezüglich der Kanalschätzung in Abwärtsrichtung das Problem, dass zur Kanalschätzung Pilotsequenzen benötigt werden, welche die gleiche Strahlformung wie die Information des Kanals erfahren haben. Somit ist bei adaptiven Antennen die Verwendung eines einzigen CPICH (P-CPICH) für die Kanalschätzung ausgeschlossen.

Aufgrund der unzuverlässigen Kanalschätz-Ergebnisse, welche man bei Verwendung der Pilotsequenzen niedriger Intensität des dedizierten Kanals erhält, werden im Falle von adaptiven Antennen antennenspezifische CPICH's eingesetzt. Durch den linear mit der Antennenanzahl steigenden Overhead für CPCH's limitiert dieses Verfahren die Anzahl der maximal einsetzbaren Antennen, so dass in der Regel nicht mehr als vier Antennen verwendet werden können.

Daher wird bevorzugterweise das grid-of-beams Verfahren angewendet, bei dem ein fixes Set an Strahlformungsvektoren bzw. Strahlen verwendet wird. Jeder dieser Strahlen beinhaltet einen S-CPICH (Secondary Common Pilot Channel), auf den der gleiche Strahlformungsvektor angewandt wird wie auf den Strahl. Jeder S-CPICH wird wie auch ein P-CPICH ununterbrochen mit konstanter Leistung abgestrahlt. Aufgrund des Antennengewinns, d.h. der Tatsache, dass sich die Amplituden der Strahlen der Einzelantennen am Empfangsort konstruktiv überlagern, kann ein S-CPICH mit geringerer Leistung ausgestrahlt werden als ein P-CPICH, welcher bei Verwendung einer einzigen Antenne eingesetzt wird. Das grid-of-beams Verfahren wirkt sich vorteilhaft auf die Güte der Kanalschätzung in Abwärtsrichtung aus. Da ein Strahl jedoch in der Regel nicht exakt in die Richtung einer Teilnehmerstation zeigt, wird die Güte der Kanalschätzung im Vergleich zum Optimalfall der exakten Ausrichtung eingeschränkt. Typischerweise liegt die Anzahl der verwendeten Strahlformungsvektoren bei dem doppelten der Antennenanzahl, um den oben genannten Verlust der ungenauen Ausrichtung auf etwa 1 dB zu begrenzen. Betrachtet man die Effizienz der Aufteilung des CPICH-Overheads zwischen den Teilnehmerstationen, so wirkt sich die Verwendung von S-CPICHS negativ aus, da die Anzahl der Teilnehmerstationen pro Strahl im Durchschnitt geringer ist als die Anzahl der Teilnehmerstationen pro Funkzelle.

Besonders problematisch in Bezug auf die Effizienz der Aufteilung des CPICH-Overheads wird der Einsatz einer HSDPA-Technologie in Verbindung mit strahlformenden Antennen. In der Regel werden bei HSDPA Funkressourcen räumlich getrennten Teilnehmerstationen zugewiesen, so dass jeder dieser Teilnehmerstationen einen eigenen S-CPICH verwendet. Dies bedeutet, dass effektiv keine Teilung des S-CPICH zwischen den verschiedenen Teilnehmerstationen existiert. Es handelt sich dann bei einem CPICH nicht mehr um einen gemeinsamen (common) Kanal.

Die Aufgabe der Erfindung ist es, ein Verfahren in einem CDMA Funkkommunikationssystem und eine entsprechende Basisstation für ein CDMA Funkkommunikationssystem der eingangs genannten Art aufzuzeigen, welches eine effektive Kanalschätzung in Abwärtsrichtung in Verbindung mit einem niedrigen durch Pilotsequenzen erzeugten Overhead ermöglicht.

Diese Aufgabe wird hinsichtlich des Verfahrens durch ein Verfahren mit den Merkmalen des Anspruchs 1 gelöst.

Ausgestaltungen und Weiterbildungen sind Gegenstand der Unteransprüche. Genauere Ausführungen und Details dieser Ausgestaltungen und Weiterbildungen finden sich im unten beschriebenen Ausführungsbeispiel.

Erfindungsgemäß variieren von der mindestens einen Basisstation zur Übertragung der mindestens einen Pilotsequenz verwendete Parameter mit der Zeit.

Die Variation mit der Zeit betrifft hierbei zumindest immer auch den Betriebszustand der Basisstation, d.h. eine Variation der Übertragungsparameter besteht nicht ausschließlich aus einem Ein- oder Ausschalten der Basisstation.

Ein Vorteil dieses Verfahrens liegt darin, dass die Übermittlung der Pilotsequenzen an den jeweiligen Bedarf angepasst werden kann. Dies ermöglicht einerseits den Teilnehmerstationen, eine Kanalschätzung großer Qualität durchzuführen, und andererseits kann eine Verschwendung von Funkressourcen durch überflüssig ausgestrahlte Pilotsequenzen vermieden werden. Somit erhöht die Adaption von Übertragungsparametern der Pilotsequenzen den effektiven Umgang mit den knappen Funkressourcen.

Vorteilhafterweise variieren von der mindestens einen Basisstation zur Übertragung der mindestens einen Pilotsequenz verwendete Parameter mit der Zeit in Abhängigkeit davon, ob die mindestens eine Teilnehmerstation die Kanalschätzung aktuell durchführt. Zur Abwicklung der zeitlichen Variation von Übertragungsparametern wird also festgestellt, ob die mindestens eine Teilnehmerstation aktuell die Kanalschätzung durchführt oder nicht. Ein einfaches Beispiel für die genannte Abhängigkeit ist der Fall, dass ein Übertragungsparameter genau dann geändert wird, wenn die mindestens eine Teilnehmerstation mit der Kanalschätzung beginnt und/oder wenn sie die Kanalschätzung beendet. Zwischen diesen Änderungen des Übertragungsparameters bleibt dieser konstant. Jedoch ist auch jegliche andersartige Variation von Übertragungsparametern mit der Zeit denkbar, solange die Abhängigkeit von der Kanalschätzung der mindestens einen Teilnehmerstation besteht.

In einer Ausgestaltung der Erfindung umfassen die mit der Zeit variierenden Übertragungsparameter eine Übertragungsleistung und/oder einen Strahlformungsvektor und/oder einen Code.

Gemäß einer Weiterbildung der Erfindung wird die mindestens eine Pilotsequenz auf einem gemeinsam genutzten Kanal übertragen. Bei einem gemeinsam genutzten Kanal handelt es sich um einen einer Verbindung nicht exklusiv zugewiesenen, d.h. einem nicht dedizierten Kanal. Ein Beispiel für einen gemeinsam genutzten Kanal, welcher zur Übertragung von Pilotsequenzen eingesetzt wird, ist ein CPICH (Common Pilot Channel). Hierbei stehen die auf diesem Kanal gesendeten Pilotsequenzen mehreren Teilnehmerstationen, welche sich im entsprechenden geographischen Gebiet aufhalten, zur Kanalschätzung zur Verfügung. Beim Einsatz von Strahlformung in Abwärtsrichtung ist ein Beispiel für einen solchen gemeinsam genutzten Kanal ein S-CPICH (Secondary CPICH). Die S-CPICH's sind mit einem Set an Strahlformungsvektoren assoziiert, so dass mehrere S-CPICH's pro Funkzelle existieren können. Die Teilnehmerstationen, welche sich im Strahlgebiet eines Strahlformungsvektors aufhalten, teilen sich dann den entsprechenden S-CPICH.

Mit Vorteil kann die zeitliche Variation von Übertragungsparametern darin bestehen, dass die Übertragungsleistung des gemeinsam genutzten Kanals für diejenigen Zeitspannen erhöht wird, in denen die mindestens eine Teilnehmerstation die Kanalschätzung durchführt. Während derjenigen Zeitspannen, in denen die mindestens eine Teilnehmerstation die Kanalschätzung durchführt, muss keine zeitliche Variation der Übertragungsleistung stattfinden. Die Werte für die Übertragungsleistung, welche während der beschriebenen Zeitspannen verwendet werden, sollen sich vielmehr von den davor und danach verwendeten Werten unterscheiden. Je höher die Intensität der empfangenen Pilotsequenzen ist, desto größer ist die Qualität der auf Grundlage der Pilotsequenzen durchgeführten Kanalschätzung. Eine Erhöhung der Übertragungsleistung einer Pilotsequenz während der Zeitspanne, in der eine Teilnehmerstation diese Pilotsequenz zur Kanalschätzung einsetzt, verbessert somit das Ergebnis der Kanalschätzung dieser Teilnehmerstation.

In einer Ausgestaltung der Erfindung wird die erfolgte Erhöhung der Übertragungsleistung des gemeinsam genutzten Kanals von der mindestens einen Teilnehmerstation ermittelt. Hierzu kann die Teilnehmerstation die empfangene Intensität des gemeinsam genutzten Kanals mit derjenigen des ihr exklusiv zugewiesenen (dedizierten) Kanals vergleichen.

In einer bevorzugten Ausführungsform der Erfindung wird die Erhöhung der Übertragungsleistung des gemeinsam genutzten Kanals von der mindestens einen Basisstation signalisiert. Diese Signalisierung kann die Messungen der Teilnehmerstation bezüglich der Übertragungsleistung des gemeinsam genutzten Kanals ergänzen oder ersetzen. Die Signalisierung durch die Basisstation hat gegenüber den Messungen durch die Teilnehmerstation den Vorteil, dass sie sich als deutlich weniger fehlerbehaftet erweist.

Vorzugsweise kann die Erhöhung der Übertragungsleistung des gemeinsam genutzten Kanals der mindestens einen Teilnehmerstation von der mindestens einen Basisstation vor oder während der Durchführung der Kanalschätzung signalisiert werden.

Gemäß einer bevorzugten Ausgestaltung der Erfindung besteht die zeitliche Variation von Übertragungsparametern darin, dass die Übertragungsleistung des gemeinsam genutzten Kanals für diejenigen Zeitspannen reduziert oder gleich Null gesetzt wird, in denen die mindestens eine Teilnehmerstation keine Kanalschätzung durchführt. Das Aussenden einer Pilotsequenz zur Kanalschätzung mit hoher Leistung entspricht dann einer Verschwendung von Funkressourcen, wenn die Pilotsequenz aktuell nicht zur Kanalschätzung verwendet wird. Daher kann in diesen Fällen die Leistung eingeschränkt werden, oder auch auf eine Ausstrahlung der Pilotsequenz verzichtet werden. Sobald ein erneuter Bedarf an Pilotsequenzen zur Kanalschätzung besteht, kann die Übertragung der Pilotsequenz wieder begonnen werden, bzw. mit erhöhter Leistung durchgeführt werden.

Mit Vorteil kann die zeitliche Variation von Übertragungsparametern darin bestehen, dass der für den gemeinsam genutzten Kanal verwendete Strahlformungsvektor für diejenigen Zeitspannen modifiziert wird, in denen die mindestens eine Teilnehmerstation die Kanalschätzung durchführt. Hierbei kann man z.B. an den Fall denken, dass die Ausstrahlungsrichtung des gemeinsam genutzten Kanals an die geographische Position der Teilnehmerstation, welche die Kanalschätzung durchführt, angepasst wird. Somit kann auch eine Übereinstimmung der Strahlformungsvektoren, welche für den dedizierten Kanal und für den gemeinsam genutzten Kanal verwendet werden, erreicht werden. Dies erhöht die Effektivität der Kanalschätzung erheblich.

In einer Weiterbildung der Erfindung besteht die zeitliche Variation von Übertragungsparametern darin, dass der für den gemeinsam genutzten Kanal verwendete Code für diejenigen Zeitspannen modifiziert wird, in denen die mindestens eine Teilnehmerstation die Kanalschätzung durchführt. Die Veränderung des Codes kann sich positiv auf die zeitbezogenen Eigenschaften der Übertragung der Pilotsequenz auswirken, so dass eine Verbesserung der Qualität der Kanalschätzung resultiert. Der Code des gemeinsam genutzten Kanals soll hiermit an die Eigenschaften des für die Übertragung von Daten verwendeten Kanals angepasst werden. Der für die Übertragung von Daten verwendete Code kann zur Minimierung von Störbeeinflussungen modifiziert werden. In diesem Fall wird auch der Code für den gemeinsam genutzten Kanal modifiziert, so dass dieser dem für die Übertragung von Daten genutzten Code entspricht.

Gemäß einer vorteilhaften Ausgestaltung der Erfindung wird die mindestens eine Pilotsequenz auf einem dedizierten Kanal übertragen. Die Teilnehmerstation kann dann den dedizierten Kanal zur Kanalschätzung seiner selbst einsetzen.

Mit Vorteil kann die zeitliche Variation von Übertragungsparametern darin bestehen, dass die Übertragungsleistung der mindestens einen Pilotsequenz auf dem dedizierten Kanal für diejenigen Zeitspannen erhöht wird, in denen die mindestens eine Teilnehmerstation die Kanalschätzung durchführt. Vorzugsweise wird die Übertragungsleistung der mindestens einen Pilotsequenz auf einen festgelegten Wert erhöht. Dieser Wert kann z.B. von der Art des eingesetzten Modulationsverfahrens abhängen. Er kann von Zeit zu Zeit neu festgelegt werden.

In Weiterbildung der Erfindung besteht die zeitliche Variation von Übertragungsparametern darin, dass der für die Übertragung der mindestens einen Pilotsequenz verwendete Strahlformungsvektor für diejenigen Zeitspannen modifiziert wird, in denen die mindestens eine Teilnehmerstation die Kanalschätzung durchführt. In einer zusätzlichen Weiterbildung der Erfindung besteht die zeitliche Variation von Übertragungsparametern darin, dass der für die Übertragung der mindestens einen Pilotsequenz verwendete Code für diejenigen Zeitspannen modifiziert wird, in denen die mindestens eine Teilnehmerstation die Kanalschätzung durchführt. Wie bereits im Falle des gemeinsam genutzten Kanals beschrieben, entspricht dies einem Einwirken auf die räumlichen bzw. die zeitlichen Eigenschaften der Übertragung der Pilotsequenz. Die Vorteile entsprechen denjenigen bei Verwendung eines gemeinsamen Kanals zur Übermittlung der Pilotsequenzen.

Das beschriebene Verfahren kann mit Vorteil auf ein WCDMA-Funkkommunikationssystem angewandt wird. Weiterhin kann es in Verbindung mit einer HSDPA-Technologie eingesetzt werden.

Im Hinblick auf die Basisstation für ein CDMA Funkkommunikationssystem wird die oben genannte Aufgabe durch eine Basisstation mit den Merkmalen des Anspruchs 19 gelöst.

Erfindungsgemäß weist die mindestens eine Basisstation Mittel zur zeitlichen Variation der zum Senden der mindestens einen Pilotsequenz verwendeten Parameter auf.

Mittel und Einrichtungen zur Durchführung der Verfahrensschritte gemäß den Ausgestaltungen und Weiterbildungen der Erfindung können in der Basisstation vorgesehen sein.

Die Basisstation wirkt als Bestandteil eines CDMA-Funkkommunikationssystems zusammen mit Teilnehmerstationen, welche Mittel zur Kanalschätzung unter Verwendung der von der Basisstation gesendeten Pilotsequenzen aufweisen.

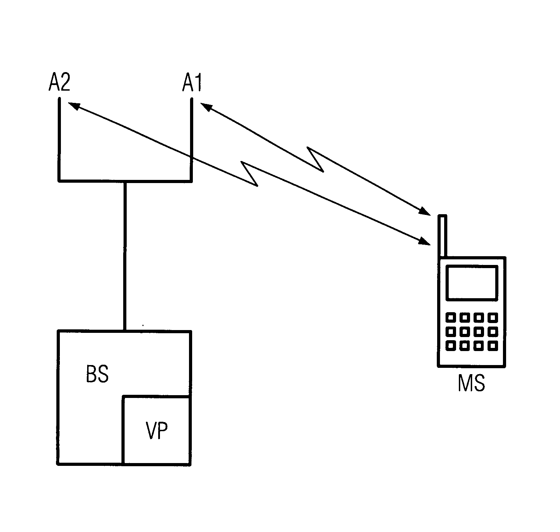

Einzelheiten und Details der Erfindung werden anhand eines Ausführungsbeispiels erläutert. Dabei zeigt
- Figur 1: einen Ausschnitt aus einem WCDMA-Funkkommunikationssystem.

Das Ausführungsbeispiel betrifft ein WCDMA-Funkkommunikationssystem, welches eine Strahlformung mittels mehrerer Antennen in Abwärtsrichtung und eine HSDPA-Technologie einsetzt. Es existiert ein fixes Set an Strahlformungsvektoren, welche von der Basisstation zur Übertragung der S-CPICH's verwendet werden. Die einer Teilnehmerstation zugeordnete Funkressource besteht aus einem HSPDSCH (High Speed Phyical Downlink Shared Channel) zur Übertragung von Nutzinformation und aus einem HS-SCCH (High Speed Shared Control Channel) zur Übertragung von Signalisierungsinformation. Zeiten, in denen eine Teilnehmerstation vom Netz bedient wird, d.h. ein dedizierter Kanal zugewiesen ist, wechseln sich mit Zeiten ab, in denen die Teilnehmerstation nicht vom Netz bedient wird. Im letzteren Fall misst die Teilnehmerstation regelmäßig die Kanalgüte und übermittelt dieses Ergebnis an die Basisstation.

Figur 1 zeigt einen Ausschnitt aus dem betrachteten WCDMA-Funkkommunikationssystem. Die Basisstation BS weist mehrere Antennen zur Strahlformung der von ihr gesendeten Signale auf. Gezeigt sind die Einzelantennen A1 und A2. Die Strahlformungsvektoren können derart gewählt werden, dass der resultierende Strahl auf das geographische Gebiet gerichtet ist, in dem sich die Teilnehmerstation MS aufhält. Die Basisstation BS ist Teil eines Basisstationsteilsystems (Base Station Subsystem), zu dem auch weitere Basisstationen gehören können. Ein weiterer, nicht gezeigter Teil dieses Systems sind Verwaltungseinrichtungen, die u.a. die Funkressourcen verwalten. Diese sind an das Kernnetz angeschlossen. Die Basisstation BS weist Mittel VP zur Variation der zum Senden von Pilotsequenzen verwendeten Parameter, wie z.B. der Übertragungsleistung oder des Codes, auf.

Zur Kanalschätzung in Abwärtsrichtung im betrachteten System können entweder Pilotsequenzen der S-CPICH's oder der dedizierten Kanäle verwendet werden.

Im folgenden wird zuerst der Fall betrachtet, dass die Pilotsequenzen der S-CPICH's zur Kanalschätzung herangezogen werden. Bei dem Einsatz von HSDPA ist davon auszugehen, dass ein S-CPICH in der Regel nur zeitweilig zur Kanalschätzung verwendet wird, nämlich dann, wenn einer Teilnehmerstation, welche aufgrund ihres Aufenthaltsortes dem jeweiligen S-CPICH zuzuordnen ist, d.h. sich im jeweiligen Strahlgebiet befindet, Funkressourcen zugewiesen werden. Um die Verschwendung der Funkressourcen, welche dadurch entsteht, dass die Pilotsequenzen des S-CPICH auch dann ausgestrahlt werden, wenn keine Teilnehmerstation im jeweiligen Strahlgebiet vom Netz bedient wird, zu vermeiden, wird die Leistung eines S-CPICH erhöht, wenn einer Teilnehmerstation im jeweiligen Strahlgebiet Funkressourcen zugeteilt wurden. Aufgrund der hohen Leistung des S-CPICH kann diese Teilnehmerstation dann eine effektive Kanalschätzung durchführen. Ein S-CPICH, in dessen Strahlgebiet sich keine aktuell vom Netz bediente Teilnehmerstation aufhält, kann in seiner Strahlungsleistung reduziert oder auch abgeschaltet werden. Dies führt zur Reduzierung des durch die S-CPICH's erzeugten Overhead.

Zur Kanalschätzung muss in der Teilnehmerstation der Leistungsoffset, d.h. der Skalierungsfaktor bezüglich der Sendeleistung, zwischen dem HSPDSCH und dem verwendeten CPICH bekannt sein. Dieser Offset kann sich dadurch ändern, dass entweder die Leistung des CPICH modifiziert wurde, oder diejenige des HS-DPSCH, oder auch beide. Zur Bekanntgabe des Offset gibt es die Möglichkeit, dass die Teilnehmerstation den Offset ermittelt oder dass die Basisstation den Offset signalisiert. Im Falle, dass die Teilnehmerstation Messungen zur Ermittlung des Offset durchführt, ist eine Leistungsanpassung des S-CPICH jederzeit möglich. Die Teilnehmerstation registriert dies dann aufgrund ihrer Messergebnisse. Im zweiten Fall, in dem die Basisstation den Offset signalisiert, bestehen verschiedene Realisierungsmöglichkeiten. Entweder kann die Leistungsanpassung des S-CPICH über den HS-SCCH z.B. gemäß
Telecom MODUS and NEC: Generation of Feedback Signalling Message for Closed Loop Mode Transmit Diversity in HSDPA, TSG-RAN WG #26, Tdoc R1-02-0807
signalisiert werden. Oder der Offset wird schon bei dem Aufbau der Verbindung zwischen der Teilnehmerstation und der Basisstation signalisiert. In diesem Fall können der Teilnehmerstation zwei Werte für den Offset signalisiert werden. Ein Wert entspricht dem Zustand, dass der jeweilige Strahl aktuell zur Datenübertragung im Rahmen des HSDPA-Verfahrens eingesetzt wird und der andere Wert dem umgekehrten Fall. Die Teilnehmerstation entscheidet dann durch Messung, welcher der beiden Werte für den Offset aktuell gültig ist. Der Entscheidungsvorgang kann z.B. gemäß
Ericsson: Dedicated Pilots as Phase Reference for HS-DPSCH Demodulation, TSG-RAN WG #26, Tdoc R1-02-0747, 2002
erfolgen.

Der S-CPICH kann auch von denjenigen Teilnehmerstationen, welche aktuell nicht vom Netz bedient werden, genutzt werden, um Signal-zu-Rausch Verhältnisse zu messen. Diese Messungen dienen als Grundlage für die netzseitige Entscheidung darüber, welche Teilnehmerstationen zukünftig bedient werden sollen. Da diesen Teilnehmerstationen die Veränderung der Leistung des S-CPICH nicht signalisiert wurde, sind die Ergebnisse entsprechend im Signal-zu-Rausch Verhältnis verschoben. Daher muss in der Basisstation eine Korrektur der Ergebnisse durchgeführt werden.

Der Beginn der Zeitspanne, während der die Leistung des S-CPICH erhöht wird, kann sich am HS-PDSCH oder am HS-SCCH oder an beiden Kanälen orientieren. Es ist auch möglich, eine längere Zeitspanne zu wählen, um eine weitere Verarbeitung der Pilotsequenzen des S-CPICH, wie z.B. eine zeitliche Mittelung, durchführen zu können.

Um die Qualität der Detektion des Nutzkanals zu verbessern, soll der Strahlformungsvektor dieses Kanals an die individuellen Eigenschaften der Teilnehmerstation, wie z.B. an den Aufenthaltsort, angepasst werden. Um die erwünschte Übereinstimmung bezüglich der Strahlformungsvektoren zwischen dem Nutzkanal und dem Kanal für die Pilotsequenzen zu erreichen, muss auch der Strahlformungsvektor des S-CPICH modifiziert werden. Dies bedeutet eine Aufhebung des fixen Sets an Strahlformungsvektoren für die S-CPICH's. Hierbei entsteht wie auch im oben beschriebenen Fall das Problem, dass Messergebnisse von vom Netz aktuell nicht bedienten Teilnehmerstationen, welche den S-CPICH zur Schätzung der Kanalgüte verwenden, beeinflusst werden. Zeigt der Kanal jedoch korreliertes Fading, so wird durch eine leichte Modifikation des Strahlformungsvektors nur die Phase, nicht die Amplitude, des Signals beeinflusst. Zur Schätzung der Kanalgüte ist die Phase jedoch nicht relevant.

Während durch die beschriebene Modifikation die räumlichen Eigenschaften des S-CPICH beeinflusst wurden, ist auch ein Einwirken auf zeitliche Eigenschaften denkbar. Hierzu wird der effektive Spreizcode des S-CPICH, der sich aus einem spreading und einem scrambling Code zusammensetzt, verändert. Dies entspricht einer Modifikation der Auto- und Crosskorrelationseigenschaften. Diese Modifikation des effektiven Spreizcodes des S-CPICH erfolgt z.B. nach einer Modifikation des für die Nutzdaten verwendeten Spreizcodes. Um eine effektive Kanalschätzung zu gewährleisten, muss der Spreizcodes des S-CPICH an den für die Nutzdaten verwendeten Spreizcode angepasst werden.

Die beschriebenen Änderungen der Übertragungsparameter der Pilotsequenzen des S-CPICH, nämlich die Steigerung der Übertragungsintensität, die Änderung der Strahlformungsvektors oder des effektiven Spreizcodes, können auch in Bezug auf die Pilotsequenzen der dedizierten Kanäle durchgeführt werden. Steigert man die Übertragungsleistung der Pilotsequenzen der dedizierten Kanäle, so ist es besonders vorteilhaft, diese Steigerung auf einen bestimmten Wert festzulegen, so dass bei Verwendung einer 16-QUAM Modulation die Kanalschätzung unter Verwendung eines soft-Wertes besonders effizient gestaltet werden kann.

Die beschriebenen Möglichkeiten, auf zur Kanalschätzung verwendete Pilotsequenzen modifizierend einzuwirken, erlauben es, die Qualität der Kanalschätzung an die burstartige Struktur der Datenübertragung bei HSDPA anzupassen.

## Patentansprüche

1. Verfahren zur Unterstützung der Kanalschätzung in Abwärtsrichtung in einem CDMA-Funkkommunikationssystem, umfassend mindestens eine Basisstation (BS) und mindestens eine Teilnehmerstation (MS), welche über eine Funkschnittstelle miteinander verbunden sind,
wobei in der Abwärtsstrecke eine Strahlformung mittels mehrerer Antennen (A1, A2) eingesetzt wird,
und wobei die mindestens eine Basisstation (BS) mindestens eine Pilotsequenz übermittelt, auf deren Grundlage die mindestens eine Teilnehmerstation (MS) die Kanalschätzung in Abwärtsrichtung durchführt,
**dadurch gekennzeichnet,**
**dass** von der mindestens einen Basisstation (BS) zur Übertragung der mindestens einen Pilotsequenz verwendete Parameter mit der Zeit variieren.

2. Verfahren nach Anspruch 1, **dadurch gekennzeichnet, dass** von der mindestens einen Basisstation (BS) zur Übertragung der mindestens einen Pilotsequenz verwendete Parameter in Abhängigkeit davon, ob die mindestens eine Teilnehmerstation (MS) die Kanalschätzung aktuell durchführt, mit der Zeit variieren.

3. Verfahren nach Anspruch 1 oder, **dadurch gekennzeichnet, dass** die mit der Zeit variierenden Übertragungsparameter eine Übertragungsleistung und/oder einen Strahlformungsvektor und/oder einen Code umfassen.

4. Verfahren nach einem der Ansprüche 1 bis 3, **dadurch gekennzeichnet, dass** die mindestens eine Pilotsequenz auf einem gemeinsam genutzten Kanal übertragen wird.

5. Verfahren nach Anspruch 4, **dadurch gekennzeichnet, dass** die zeitliche Variation von Übertragungsparametern darin besteht, dass die Übertragungsleistung des gemeinsam genutzten Kanals für diejenigen Zeitspannen erhöht wird, in denen die mindestens eine Teilnehmerstation (MS) die Kanalschätzung durchführt.

6. Verfahren nach Anspruch 5, **dadurch gekennzeichnet, dass** die erfolgte Erhöhung der Übertragungsleistung des gemeinsam genutzten Kanals von der mindestens einen Teilnehmerstation (MS) ermittelt wird.

7. Verfahren nach Anspruch 5 oder 6, **dadurch gekennzeichnet, dass** die Erhöhung der Übertragungsleistung des gemeinsam genutzten Kanals von der mindestens einen Basisstation (BS) signalisiert wird.

8. Verfahren nach Anspruch 7, **dadurch gekennzeichnet, dass** die Erhöhung der Übertragungsleistung des gemeinsam genutzten Kanals der mindestens einen Teilnehmerstation (MS) von der mindestens einen Basisstation (BS) vor oder während der Durchführung der Kanalschätzung signalisiert wird.

9. Verfahren nach einem der Ansprüche 4 bis 8, **dadurch gekennzeichnet, dass** die zeitliche Variation von Übertragungsparametern darin besteht, dass die Übertragungsleistung des gemeinsam genutzten Kanals für diejenigen Zeitspannen reduziert oder gleich Null gesetzt wird, in denen die mindestens eine Teilnehmerstation (MS) keine Kanalschätzung durchführt.

10. Verfahren nach einem der Ansprüche 4 bis 9, **dadurch gekennzeichnet, dass** die zeitliche Variation von Übertragungsparametern darin besteht, dass der für den gemeinsam genutzten Kanal verwendete Strahlformungsvektor für diejenigen Zeitspannen modifiziert wird, in denen die mindestens eine Teilnehmerstation (MS) die Kanalschätzung durchführt.

11. Verfahren nach einem der Ansprüche 4 bis 10, **dadurch gekennzeichnet, dass** die zeitliche Variation von Übertragungsparametern darin besteht, dass der für den gemeinsam genutzten Kanal verwendete Code für diejenigen Zeitspannen modifiziert wird, in denen die mindestens eine Teilnehmerstation (MS) die Kanalschätzung durchführt.

12. Verfahren nach einem der Ansprüche 1 bis 3, **dadurch gekennzeichnet, dass** die mindestens eine Pilotsequenz auf einem dedizierten Kanal übertragen wird.

13. Verfahren nach Anspruch 12, **dadurch gekennzeichnet, dass** die zeitliche Variation von Übertragungsparametern darin besteht, dass die Übertragungsleistung der mindestens einen Pilotsequenz für diejenigen Zeitspannen erhöht wird, in denen die mindestens eine Teilnehmerstation (MS) die Kanalschätzung durchführt.

14. Verfahren nach Anspruch 13, **dadurch gekennzeichnet, dass** die Übertragungsleistung der mindestens einen Pilotsequenz auf einen festgelegten Wert erhöht wird.

15. Verfahren nach einem der Ansprüche 12 bis 14, **dadurch gekennzeichnet, dass** die zeitliche Variation von Übertragungsparametern darin besteht, dass der für die Übertragung der mindestens einen Pilotsequenz verwendete Strahlformungsvektor für diejenigen Zeitspannen modifiziert wird, in denen die mindestens eine Teilnehmerstation (MS) die Kanalschätzung durchführt.

16. Verfahren nach einem der Ansprüche 12 bis 15, **dadurch gekennzeichnet, dass** die zeitliche Variation von Übertragungsparametern darin besteht, dass der für die Übertragung der mindestens einen Pilotsequenz verwendete Code für diejenigen Zeitspannen modifiziert wird, in denen die mindestens eine Teilnehmerstation (MS) die Kanalschätzung durchführt.

17. Verfahren nach einem der Ansprüche 1 bis 16, **dadurch gekennzeichnet, dass** es auf ein WCDMA-Funkkommunikationssystem angewandt wird.

18. Verfahren nach einem der Ansprüche 1 bis 17 **dadurch gekennzeichnet, dass** es in Verbindung mit einer HSDPA-Technologie eingesetzt wird.

19. Basisstation (BS) für ein CDMA-Funkkommunikationssystem, umfassend mindestens die eine Basisstation (BS) und mindestens eine Teilnehmerstation (MS), welche über eine Funkschnittstelle miteinander verbunden sind, wobei die mindestens eine Basisstation (BS)
- Mittel zur Strahlformung mittels mehrerer Antennen (A1, A2) und
- Mittel zum Senden von mindestens einer Pilotsequenz aufweist,
**dadurch gekennzeichnet,**
**dass** die mindestens eine Basisstation (BS) Mittel (VP) zur zeitlichen Variation der zum Senden der mindestens einen Pilotsequenz verwendeten Parameter aufweist.
